# EUROPÄISCHE PATENTSCHRIFT

(11) **EP 1 344 664 B1**
(45) Veröffentlichungstag und Bekanntmachung des Hinweises auf die Patenterteilung: **02.08.2006**
(21) Anmeldenummer: 03005623.8
(22) Anmeldetag: 12.03.2003
(51) Int. Cl.: B60H 1/00, F24F 13/10

(54) **Luftmischeinrichtung**
Air mixing device
Dispositif de mixage d'air

(30) Priorität: 14.03.2002 DE 10211190
(43) Veröffentlichungstag der Anmeldung: 17.09.2003
(73) Patentinhaber: Behr GmbH & Co. KG, 70469 Stuttgart (DE)
(72) Erfinder: Klingler, Dieter, Dipl.-Ing., 73540 Heubach (DE); Schwahn, Werner, 71701 Schwieberdingen (DE)

(56) Entgegenhaltungen:
- EP-A- 1 118 481
- DE-A- 19 826 990
- FR-A- 2 761 015
- US-B1- 6 296 562
- US-B1- 6 508 703

## Beschreibung

Die Erfindung bezieht sich auf eine Luftmischeinrichtung für eine Heizungs- oder Klimaanlage eines Kraftfahrzeuges nach dem Oberbegriff des Patentanspruches 1.

Die Luftmischeinrichtung gemäß der DE 198 26 990 A1 der Anmelderin weist einen Warmluft- und einen Kaltlufteinlass auf, deren Eintrittsquerschnitte etwa rechtwinklig zueinander angeordnet sind. Auf der Austrittseite beider Lufteinlässe schließen sich parallel angeordnete Kanalplatten an, die Luftkanäle für eine bessere Durchmischung der Kalt- und Warmluftströme bilden. Die Eintrittquerschnitte für die Warm- und Kaltluft, werden durch so genannte Jalousieklappen, bestehend aus einzelnen Lamellen, kontrolliert. Die Lamellen werden mechanisch über eine Schubstange angesteuert und sind somit in unterschiedlichen Stellungen, d. h. von maximal auf über Zwischenstellungen bis maximal geschlossen steuerbar. Eine solche Luftmischeinrichtung ist im Gehäuse einer Heizungs- und/oder Klimaanlage für ein Kraftfahrzeug stromabwärtig von einem Verdampfer und einem Heizkörper angeordnet und bewirkt auf relativ geringem Bauraum eine gute Durchmischung der unterschiedlich temperierten Luftströme, die dann in einen Mischraum eintreten. Die als Steuermittel für den Luftstrom verwendeten Jalousieklappen können aufgrund der Vielzahl der Teile (Lamellen) zu Klapper- und Pfeifgeräuschen neigen, was als nachteilig angesehen werden könnte. Zudem beanspruchen die bekannten Jalousieklappen auch eine gewisse Tiefe des Bauraumes.

Durch die DE 35 14 358 A1 der Anmelderin wurde eine Heizungs- oder Klimaanlage bekannt, bei welcher eine so genannte Rolljalousie für die Steuerung des Luftdurchsatzes durch Luftströmungskanäle Verwendung findet. Eine solche Rolljalousie besteht aus einem Rollband, welches teilweise mit Ausschnitten versehen ist und die Durchtrittsöffnungen von Luftströmungskanälen schließt oder freigibt. Das Rollband wird über einzelne Walzen geführt, auf- und abgewickelt und mittels eines Stellmotors über eine Antriebswalze in Schließ- oder Offnungsstellung gebracht.

Die FR 2761 015 offenbart eine Klimaanlage mit einem Band, welches zwischen zwei Rollen durch Auf und Abrollen hin und her bewegbar ist.

Es ist Aufgabe der vorliegenden Erfindung eine Luftmischeinrichtung der eingangs genannten Art hinsichtlich ihres Bauraumes und insbesondere in Bezug auf die verwendeten Steuermittel zur Steuerung der Luftströme zu verbessern.

Diese Aufgabe wird gelöst durch die Merkmale des Patentanspruches 1 und der nachfolgenden Unteransprüche. Die gattungsgemäße Luftmischeinrichtung verfügt aufgrund der Rolljalousie über ein Steuermittel, welches praktisch keinen zusätzlichen Bauraum benötigt. Die Rolljalousie arbeitet geräuschfrei, da Klapper- und Pfeifgeräusche nicht auftreten. Der Antrieb über eine integrierte Antriebswalze erfolgt einfach und problemlos. Die erfindungsgemäße Luftmischeinrichtung kann somit als äußerst kompaktbauendes Luftmischmodul, bestehend aus Luftmischeinrichtung mit Rolljalousie und Antrieb, als Baueinheit mit minimalem Bauraum dargestellt werden. Es trägt somit zur Steuerung der Effizienz einer Heizungs- oder Klimaanlage bei.

Eine weitere vorteilhafte Ausgestaltung der Erfindung ergibt sich dadurch, dass die Eintrittsquerschnitte des Warmluft- und des Kaltluftseinlasses etwa rechtwinklig zu einander angeordnet und dass beiderseits der Eintrittsquerschnitte parallel angeordnete Walzen zur Führung und zum Antrieb der Rolljalousie vorgesehen sind. Dabei kann die Antriebswalze raumsparend in das Gehäuse der Luftmischeinrichtung integriert werden. Durch die rechtwinklige Anordnung, d. h. die 90°-Umlenkung der Rolljalousie ergibt sich eine stabile und flatterfreie Führung des Rollbandes. Aufgrund der räumlich sehr beschränkten Einbauverhältnisse in einer Heizungs- oder Klimaanlage erweist sich die Verwendung der Rolljalousie als besonderer Vorteil.

Nach einer weiteren vorteilhaften Ausgestaltung der Erfindung erfolgt der Antrieb der Rolljalousie über Ritzel auf der Antriebswelle und eine randseitige Perforation im Rollband - etwa wie beim Transport eines Filmes in einer Kamera. Damit ist eine exakte Ausrichtung der Rolljalousie und eine genaue Bestimmung der jeweiligen Eintrittsquerschnitte für die Kaltluft- und für die Warmluftseite möglich, d. h. für eine optimale Mischung der beiden unterschiedlich temperierten Luftströme.

Der Antrieb kann auch auf andere Art erfolgen, z. B. durch Befestigungen des Rollbandes auf der Antriebswelle oder durch zwei separate Rollbänder für Warmluft- und Kaltlufteinlass, die dann gemeinsam, z. B. über ein Zahnrad angetrieben werden.

Ein Ausführungsbeispiel der Erfindung ist in der Zeichnung dargestellt und wird im Folgenden naher beschrieben. Es zeigen
- Fig. 1: eine Klimaanlage mit Luftmischeinrichtung,
- Fig. 2: die Luftmischeinrichtung gemäß Fig. 1 und
- Fig. 3: verschiedene Positionen der Rolljalousie der Luftmischeinrichtung.

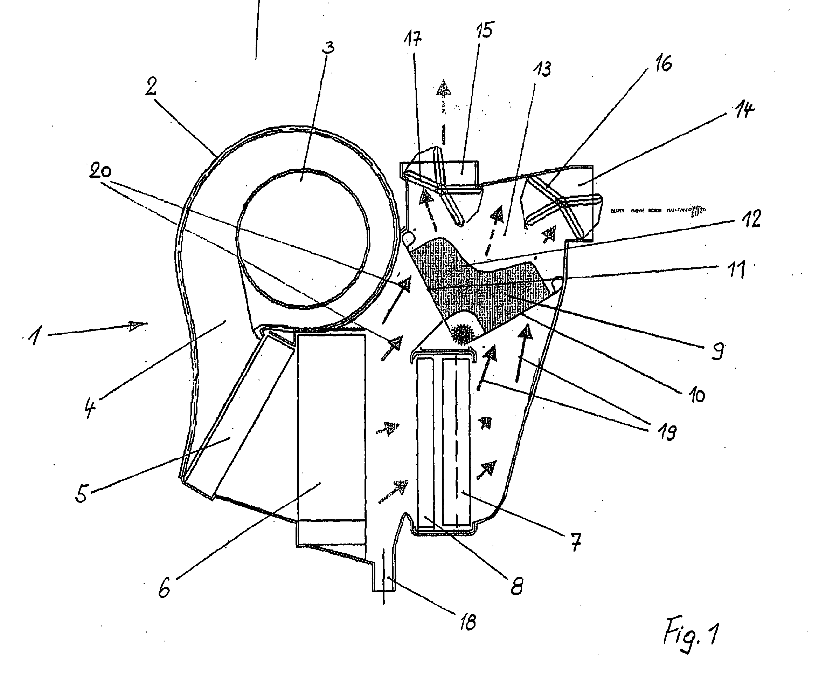

**Fig. 1** zeigt einen Schnitt durch eine Klimaanlage 1 für ein Kraftfahrzeug. In einem Gehäuse 2 ist ein Radialgebläse 3 angeordnet, welches die zu klimatisierende Luft von Außen (nicht dargestellt) ansaugt und durch einen spiralförmig ausgebildeten Luftkanal 4 in das Innere der Klimaanlage 1 drückt. Am stromabwärtigen Ende des Gebläsekanals 4 befindet sich ein Filter 5, welches Partikel, Pollen, Geruchsstoffe und dergleichen zurückhält. Ferner ist in der Klimaanlage 1 ein Verdampfer 6 sowie ein Heizkörper 7 mit einem vorgeschalteten Wabengitter 8 vorgesehen. In der Zeichnung oberhalb des Heizkörpers 7 befindet sich eine Luftmischeinrichtung 9, welche sich über den gesamten Luftströmungskanal der Klimaanlage 1 erstreckt und zwei Lufteinlässe, nämlich einen Warmlufteinlass 10 und einen Kaltlufteinlass 11 sowie einen Mischluftauslass 12 aufweist. Stromabwärts von der Luftmischeinrichtung 9, die unten näher erläutert wird, ist ein Mischraum 13 vorgesehen, der in einen Belüftungskanal 14 und einen Entfrostungskanal 15 mündet, welche jeweils durch Klappen 16, 17 bezüglich ihres Strömungsquerschnittes kontrolliert werden. In Luftströmungsrichtung hinter dem Verdampfer 6 und vor dem Heizkörper 7 befindet sich ein nach unten öffnender Kondensatauslass 18, über welchen das im Verdampfer 6 anfallende Kondensat abgeführt wird.

Die Klimaanlage 1 arbeitet wie folgt: Die von außen (aus der Atmosphäre) über das Gebläse 3 angesaugte Luft gelangt über den Kanal 4 in das Filter 5, wo sie gereinigt wird. Anschließend durchströmt die Luft den Verdampfer 6, wo sie abgekühlt und entfeuchtet wird. Kondensat in Folge von Luftfeuchtigkeit tritt durch den Kanal 18 nach außen. Hinter dem Verdampfer 6 teilt sich der Luftstrom: ein Teil strömt durch den Heizkörper 7, wo die Luft erwärmt wird und anschließend als Warmluftstrom 19 (gekennzeichnet durch Pfeile) auf den Warmlufteinlass 10 der Luftmischeinrichtung 9 trifft. Der andere Teil des aus dem Verdampfer 6 austretenden Luftstromes, der so genannte Kaltluftstrom 20 (durch Pfeile gekennzeichnet), trifft auf den Kaltlufteinlass 11 der Luftmischeinrichtung 9. In der Luftmischeinrichtung 9 werden beiden Luftströme, der Warmluftstrom 19 und der Kaltluftstrom 20 gemischt, so dass sie beim Eintritt in den Mischraum 13 eine möglichst gleichmäßige Lufttemperatur aufweisen. Aus dem Mischraum 13 wird die Luft über den Kanal 15 zur Entfrostung an eine nicht dargestellte Windschutzscheibe des Kraftfahrzeuges geführt, wobei dieser Teilluftstrom über die Klappe 17 hinsichtlich seiner Menge gesteuert wird. Ein anderer Teil der Luft wird über den Kanal 14 den nicht dargestellten Belüftungsdüsen dem Fahrzeuginnenraum des Kraftfahrzeuges zugeführt und ebenfalls hinsichtlich der Strömungsmenge über die Klappe 16 kontrolliert. Die Menge der Warmluft (Warmluftstrom 19) und die Menge der Kaltluft (Kaltluftstrom 20) werden über Steuermittel der Luftmischeinrichtung 9, was im Folgenden erläutert wird, eingestellt.

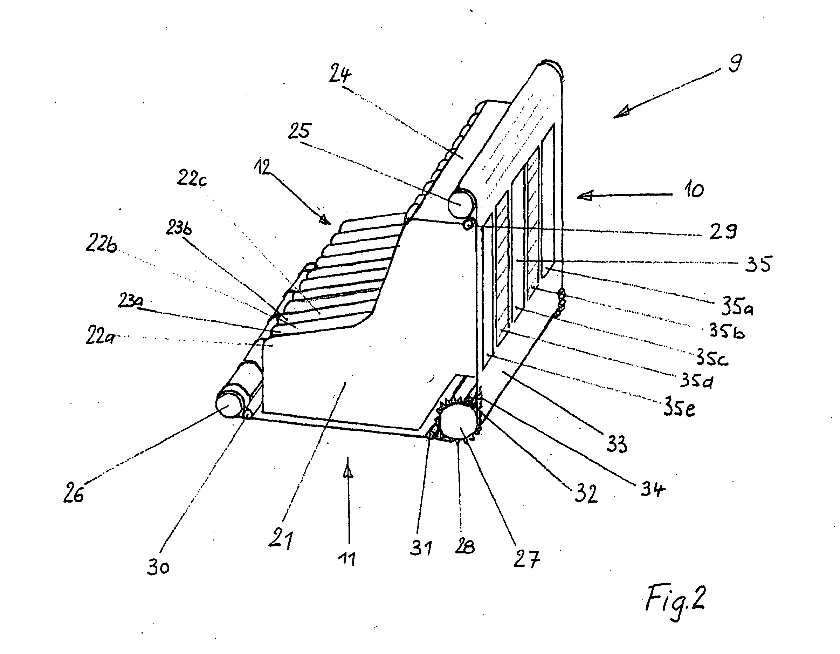

**Fig. 2** zeigt die Luftmischeinrichtung 9 gemäß Fig. 1, hier einzeln als Baugruppe bzw. Modul dargestellt. Dieses Luftmischmodul 9 besteht aus einem Grundkörper 21, der sich aus einer Vielzahl von parallel zueinander angeordneten Kanalplatten 22a, 22b, 22c... zusammensetzt, welche zwischen sich Luftkanäle 23a, 23b,... bilden. Das Luftmischmodul 9 weist einen Warmlufteinlass 10 und einen Kaltlufteinlass 11 auf, wobei beide Ebenen 10 und 11 etwa einen rechten Winkel zueinander bilden. Die Kanalplatten 22a, 22b werden über einen Gehäuserahmen 24 zusammen gehalten und erstrecken sich jeweils bis zum Warmlufteinlass 10 und zum Kaltlufteinlass 11, so dass sich durchgehende Kanäle 23a, 23b... ergeben. Soweit ist die Luftmischeinrichtung 9 aus der DE 198 26 990 A1 der Anmelderin bekannt.

An dem Gehäuse 24 sind, angrenzend an den Warmlufteinlass 10, eine erste Umlenkwelle 25 und, angrenzend an den Kaltlufteinlass 21, eine zweite Umlenkwelle 26 befestigt. Zwischen beiden Umlenkwellen 25 und 26 ist in den Eckbereich des Grundköpers 21 eine Antriebswelle 27 eingebaut, die stirnseitig jeweils ein Ritzel trägt, wobei nur das in der Zeichnungsebene vorne liegende Ritzel 28 erkennbar ist. Unmittelbar neben den Umlenkwellen 25, 26 und der Antriebswelle 27 sind jeweils Stützwellen 29, 30, 31, 32 drehbar gelagert. Über die Umlenkwellen 25, 26, die Stützwellen 29, 30, 31,32 und die Antriebswelle 27 ist eine Rolljalousie 33 geführt, die als endloses Rollband ausgebildet ist. Die Rolljalousie 33 weist in ihren Randbereichen eine durchgehende Perforation 34 auf, in welche die Zähne des Ritzels 28 eingreifen und somit den Transport der Rolljalousie bewirken. Die Antriebswelle 27 wird durch einen nicht dargestellten Stellmotor angetrieben, der zumindest teilweise in die Antriebswelle 27 integriert werden kann. Die Rolljalousie 33 weist einzelne Ausschnitte auf, von denen hier nur ein Ausschnitt 35 auf der Warmluftseite 10 erkennbar ist. Insgesamt weist die Rolljalousie 33 - wie grundsätzlich aus der DE 35 14 358 A1 der Anmelderin bekannt - mehrere hinter einander angeordnete geschlossene Abschnitte und Ausschnitte auf, so dass der Warmlufteinlass 10 und der Kaltlufteinlass 11 entweder völlig geschlossen, völlig freigegeben oder teilweise frei gegeben sind.

Gemäß einer alternativen Ausführungsform muss sich der Ausschnitt 35 nicht über die gesamte Breite des Rollbandes erstrecken, sondern kann sich mit streifenförmigen Ausschnitten 35a, 35c, 35e und geschlossenen Abschnitten 35b, 35d, die schraffiert dargestellt sind, abwechseln, so dass die Luftkanäle 23a, 23b,... wechselweise offen und geschlossen sind.

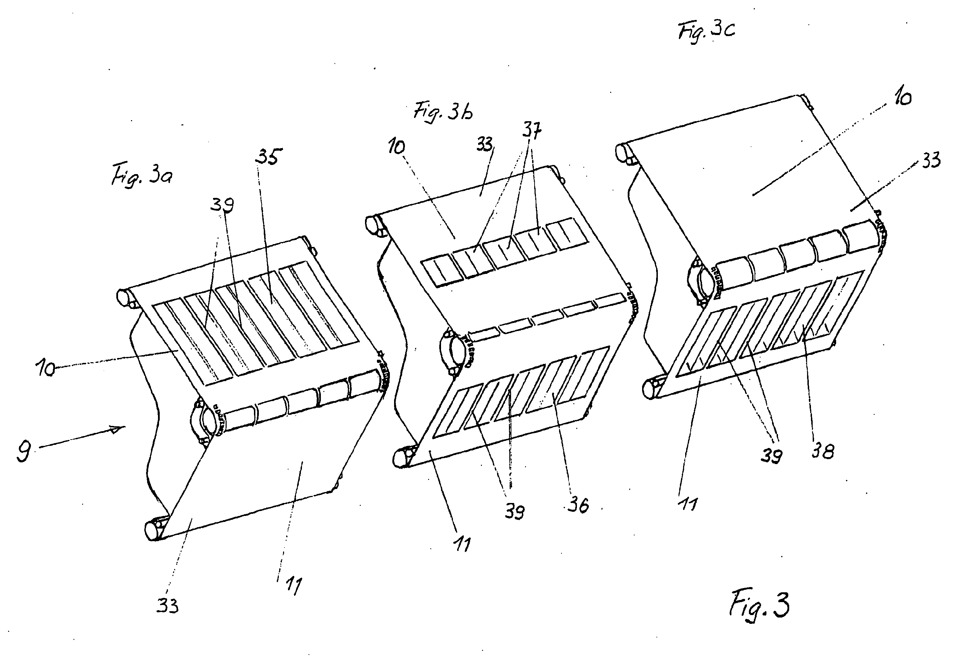

**Fig. 3** zeigt verschiedene Positionen der Rolljalousie 33, wobei drei Positionen in den Figuren 3a, 3b und 3c dargestellt sind.

**Fig. 3a** zeigt das Luftmischmodul 9 mit vollständig geöffnetem Warmlufteinlass 10, wobei der Ausschnitt 35, der die gleiche Querschnittsfläche wie der Warmlufteinlass 10 aufweist, diesen völlig freigibt. Die Kaltluftseite 11 dagegen wird durch die Rolljalousie 33 vollständig abgedeckt.

**In Fig. 3b** ist der Kaltlufteinlass 11 durch einen Ausschnitt 36 in der Rolljalousie 33 teilweise geöffnet (Zwischenstellung). Der Warmlufteinlass 10 ist auch teilweise geöffnet, allerdings aufgrund eines kleineren Ausschnittes 37 der Rolljalousie 33 ist nur ein kleinerer Querschnitt des gesamten Warmlufteintrittsquerschnittes freigegeben.

**In Fig. 3c** ist der Warmlufteinlass 10 vollständig durch die Rolljalousie 33 abgedeckt, d. h. geschlossen, und der Kaltlufteinlass 11 ist infolge des Ausschnittes 38 in der Rolljalousie 33 vollständig geöffnet.

Die einzelnen Ausschnitte 35, 36, 37, 38 sind durch schmale Bänder 39 unterteilt, damit beim Transport der Rolljalousie 33 und auch in einer entsprechenden Betriebsposition die notwendige Zugspannung im Rollband aufrechterhalten bleibt und dadurch eine dichte und flatterfreie Anlage des Rollbandes am Luftmischmodul 9 gewährleistet ist. Die Verteilung der einzelnen Ausschnitte 35, 36, 37, 38 über das gesamte Rollband - in Länge-; und Querrichtung - kann beliebig gewählt werden, um eine unterschiedliche Aufteilung des Warmluft- und des Kaltluftstromes in der Klimaanlage und damit unterschiedliche Luftmischtemperaturen zu erreichen.

Insbesondere ist es möglich, die Verteilung der Ausschnitte 35, 36, 37, 38 quer zur Bewegungsrichtung des Rollbandes derartig zu variieren, dass zwischen den schmalen Bändern 39 abwechselnd Ausschnitte und Abdeckungen (vgl. auch Fig. 2: 35a, 35b, 35c, 35d, 35e) vorgesehen sind, so dass in Querrichtung die Kanäle 23a, 23c, 23e offen und die Kanäle 23b, 23d, 23f abgedeckt sind. Eine solche wechselweise Anordnung von Ausschnitten und Abdeckungen kann sowohl auf der Kaltluftseite als auch auf der Warmluftseite vorgesehen sein, allerdings in der Weise versetzt, dass jeweils ein auf der Warmluftseite geschlossener Kanal auf der Kaltluftseite offen ist und umgekehrt.

## Patentansprüche

1. Luftmischeinrichtung (9) für eine Heizungs- oder Klimaanlage (1) eines Kraftfahrzeugs zum Mischen von Kaltluft- und Warmluftströmen (19, 20) mit einem Kaltlufteinlass (11) und einem Warmlufteinlass (10) sowie einem Auslass (12) für einen Mischluftstrom, mit mehreren, vorzugsweise aus im Wesentlichen parallelen Kanalplatten (22a, 22b, 22c,...), gebildeten Kanälen (23a, 23b, ...) und mit Steuermitteln zum Öffnen und Schließen der Lufteinlässe (10, 11) und die Steuermittel als Rolljalousie (33) ausgebildet sind, **dadurch gekennzeichnet, dass** die Rolljalousie als endloses Rollband ausgebildet ist.

2. Luftmischeinrichtung nach Anspruch 1, **dadurch gekennzeichnet, dass** die Rolljalousie (33) aus einem Rollband mit Ausschnitten (35, 36, 37,38) besteht, welches über den Warmlufteinlass (10) und den Kaltlufteinlass (11) geführt ist und die Luftdurchtrittsquerschnitte der Lufteinlässe (10, 11) wechselseitig kontrolliert.

3. Luftmischeinrichtung nach Anspruch 2, **dadurch gekennzeichnet, dass** die Ausschnitte (35, 36, 37, 38) in der Rolljalousie (33) derart verteilt angeordnet sind, dass entweder
a) der Warmlufteinlass (10) geschlossen und der Kaltlufteinlass (11) geöffnet oder
b) der Warmlufteinlass (10) geöffnet und der Kaltlufteinlass (11) geschlossen oder
c) Zwischenstellungen zu a) und b) möglich sind.

4. Luftmischeinrichtung nach einem der Ansprüche 1 bis 3, **dadurch gekennzeichnet, dass** die Rolljalousie (33) über drei Walzen (25, 26, 27) geführt ist, deren Achsen die Eckpunkte eines etwa rechtwinkligen Dreiecks durchstoßen.

5. Luftmischeinrichtung nach Anspruch 4, **dadurch gekennzeichnet, dass** zwei Walzen als Umlenkwellen (25, 26) und eine Walze als Antriebswelle (27) ausgebildet sind.

6. Luftmischeinrichtung nach Anspruch 5, **dadurch gekennzeichnet, dass** die Antriebswelle (27) zwischen den beiden Umlenkwellen (25, 26) im Bereich des Eckpunktes des rechten Winkels angeordnet ist.

7. Luftmischeinrichtung nach Anspruch 5 oder 6, **dadurch gekennzeichnet, dass** die Antriebswelle (27) in das Gehäuse (21, 24) integriert ist.

8. Luftmischeinrichtung nach einem der Ansprüche 4 bis 7, **dadurch gekennzeichnet, dass** jeder Walze (25, 26, 27) zumindest eine Stützwelle (29, 30, 31, 32) zugeordnet ist.

9. Luftmischeinrichtung nach einem der Ansprüche 4 bis 8, **dadurch gekennzeichnet, dass** die Rolljalousie (33) randseitig eine Perforation (34) aufweist, in welche auf der Antriebswelle (27) befestigte Ritzel (28) eingreifen.

10. Luftmischeinrichtung nach einem der Ansprüche 2 bis 9, **dadurch gekennzeichnet, dass** die Verteilung der Ausschnitte (35, 36, 37, 38) quer zur Bewegungsrichtung der Rolljalousie (33) derart gewählt ist, dass wechselweise eine Abdeckung (35b, 35d) und Freigabe (35a, 35c, 35e) der Kanäle (23a, 23b, 23c,...) auf der Kalt- und/oder auf der Warmluftseite (10, 11) erfolgt.

## Claims

1. An air mixing device (9) for a heating or cooling system (1) for a motor vehicle for mixing cold air and warm air flows (19, 20) having a cold air inlet (11) and a warm air inlet (10) and an outlet (12) for a mixed air flow, several ducts (23a, 23b, ...) preferably in the form of essentially parallel duct plates (22a, 22b, 22c, ...) and a control means for opening and closing the air inlets (10, 11), said control means being designed as a roller blind (33),
**characterised in that**
the roller blind is designed as an endless roller belt.

2. An air mixing device in accordance with claim 1,
**characterised in that**
the roller blind (33) consists of a roller belt with cut-outs (35, 36, 37, 38) which runs over the warm air inlet (10) and the cold air inlet (11) and which controls the air throughput cross-section of the air inlets (10, 11) reciprocally.

3. An air mixing device in accordance with claim 2,
**characterised in that**
the cut-outs (35, 36, 37, 38) are distributed across the roller blind (33) in such a manner that:
a) the warm air inlet (10) is closed and the cold air inlet (11) is open, or
b) the warm air inlet (10) is open and the cold air inlet (11) is closed, or
c) intermediate positions between a) and b) are possible.

4. An air mixing device in accordance with one of claims 1 to 3,
**characterised in that**
the roller blind (33) runs over three rollers (25, 26, 7) which have axes which pass through the corner points of an approximately rectangular triangle.

5. An air mixing device in accordance with claim 4,
**characterised in that**
the two rollers are designed as idle shafts (25, 26) and one roller is designed as a drive shaft (27).

6. An air mixing device in accordance with claim 5,
**characterised in that**
the drive shaft (27) is positioned between the two idle shafts (25, 26) in the area of the corner point of the right angle.

7. An air mixing device in accordance with claim 5 or 6,
**characterised in that**
the drive shaft (27) is integrated in the housing (21, 24).

8. An air mixing device in accordance with one of claims 4 to 7,
**characterised in that**
at least one supporting shaft (29, 30, 31, 32) is assigned to each roller (35, 36, 37).

9. An air mixing device in accordance with one of claims 4 to 8,
**characterised in that**
the edge of the roller blind (33) has perforations (34) in which pinions (28) fixed to the drive shaft (27) engage.

10. An air mixing device in accordance with one of claims 2 to 9,
**characterised in that**
the distribution of the cut-outs (35, 36, 37, 38) at right angles to the direction of movement of the roller blind (33) is selected such that the ducts (23a, 23b, 23c, ...) on the cold and/or warm air sides (10, 11) are alternately covered (35b, 35d) and revealed (35a, 35c, 35e).

## Revendications

1. Dispositif de mélange d'air (9) pour une installation de chauffage ou de climatisation (1) d'un véhicule automobile pour le mélange de flux d'air froid et de flux d'air chaud (19, 20) avec une entrée d'air froid (11) et une entrée d'air chaud (10) ainsi qu'une sortie (12) pour un flux d'air mixte, avec plusieurs canaux (23a, 23b) formés de préférence de plaques de canal (22a, 22b, 22c,...) sensiblement parallèles et avec des moyens de commande pour ouvrir et fermer les entrées d'air (10, 11) et les moyens de commande étant conçus comme store (33), **caractérisé en ce que** le store est conçu comme une bande roulante sans fin.

2. Dispositif de mélange d'air selon la revendication 1, **caractérisé en ce que** le store (33) est constitué d'une bande roulante avec des découpes (35, 36, 37, 38), qui est guidé par l'entrée d'air chaud (10) et l'entrée d'air froid (11) et qui contrôle alternativement les sections de passage d'air des entrées d'air (10, 11).

3. Dispositif de mélange d'air selon la revendication 2, **caractérisé en ce que** les découpes (35, 36, 37, 38) sont disposées avec une répartition sur le store (33) de telle sorte que soit
a) l'entrée d'air chaud (10) est fermée et l'entrée d'air froid (11) est ouverte soit
b) l'entrée d'air chaud (10) est ouverte et l'entrée d'air froid (11) est fermée soit
c) des positions intermédiaires concernant a) et b) sont possibles.

4. Dispositif de mélange d'air selon l'une quelconque des revendications 1 à 3, **caractérisé en ce que** le store (33) est guidé au moyen de trois cylindres (25, 26, 27), dont les axes passent par les sommets d'un triangle à peu près équilatéral.

5. Dispositif de mélange d'air selon la revendication 4, **caractérisé en ce que** deux cylindres sont conçus comme cylindres de renvoi (25, 26) et un cylindre comme un arbre d'entraînement (27).

6. Dispositif de mélange d'air selon la revendication 5, **caractérisé en ce que** l'arbre d'entraînement (27) est disposé entre les deux arbres de renvoi (25, 26) dans la zone du sommet de l'angle droit.

7. Dispositif de mélange d'air selon la revendication 5 ou 6, **caractérisé en ce que** l'arbre d'entraînement (27) est intégré dans le boîtier (21, 24).

8. Dispositif de mélange d'air selon l'une quelconque des revendications 4 à 7, **caractérisé en ce qu'**au moins un arbre de soutien (29, 30, 31, 32) est attribué à chaque cylindre (25, 26, 27).

9. Dispositif de mélange d'air selon l'une quelconque des revendications 4 à 8, **caractérisé en ce que** le store (33) présente côté bordure une perforation (34) dans laquelle s'engagent des pignons (28) fixés sur l'arbre d'entraînement (27).

10. Dispositif de mélange d'air selon l'une quelconque des revendications 2 à 9, **caractérisé en ce que** la répartition des découpes (35, 36, 37, 38) est choisie transversalement au sens de déplacement du store (33) de telle sorte que alternativement un recouvrement (35b, 35d) et un dégagement (35a, 35c, 35e) des canaux (23a, 23b, 23c,...) interviennent sur le côté air froid et/ou sur le côté air chaud (10, 11).
